# EUROPÄISCHE PATENTSCHRIFT

(11) **EP 3 257 134 B1**
(45) Veröffentlichungstag und Bekanntmachung des Hinweises auf die Patenterteilung: **28.09.2022**
(21) Anmeldenummer: 16702336.5
(22) Anmeldetag: 14.01.2016
(51) Int. Cl.: H02J 7/14, H02H 7/12, H02P 9/10, H02P 9/48, H02P 29/024

(54) **VERFAHREN ZUM BETREIBEN EINES AN EINE ELEKTRISCHE MASCHINE ANGESCHLOSSENEN AKTIVEN UMRICHTERS UND MITTEL ZU DESSEN IMPLEMENTIERUNG**
METHOD FOR OPERATING AN ACTIVE CONVERTER CONNECTED TO AN ELECTRIC MASCHINE AND DEVICE FOR ITS IMPLEMENTATION
PROCÉDÉ DE FONCTIONNEMENT D'UN CONVERTISSEUR ACTIF CONNECTÉ À UNE MACHINE ÉLECTRIQUE ET DISPOSITIF POUR SA MISE EN OEUVRE

(30) Priorität: 11.02.2015 DE 102015202437
(43) Veröffentlichungstag der Anmeldung: 20.12.2017
(73) Patentinhaber: SEG Automotive Germany GmbH, 70499 Stuttgart (DE)
(72) Erfinder: MEHRINGER, Paul, 70569 Stuttgart (DE)
(74) Vertreter: DehnsGermany Partnerschaft von Patentanwälten
(86) Internationale Anmeldenummer: PCT/EP2016/050647
(87) Internationale Veröffentlichungsnummer: WO 2016/128165

(56) Entgegenhaltungen:
- WO-A1-2015/078685
- DE-A1-102011 006 316
- DE-A1-102013 213 802
- DE-A1-102015 208 302
- US-A1- 2014 343 739

## Beschreibung

Die vorliegende Erfindung betrifft ein Verfahren zum Betreiben eines an eine elektrische Maschine angeschlossenen aktiven Umrichters und Mittel zur Implementierung dieses Verfahrens gemäß den jeweiligen Oberbegriffen der unabhängigen Patentansprüche.

### Stand der Technik

Zur Speisung von Gleichstromnetzen aus Drehstromquellen, insbesondere von Kraftfahrzeugbordnetzen durch Drehstromgeneratoren, können als Gleichrichter betriebene Umrichter unterschiedlicher Bauart eingesetzt werden. In Kraftfahrzeugbordnetzen werden in Entsprechung zu den hier üblicherweise verbauten drei-, vier- oder fünfphasigen Drehstromgeneratoren üblicherweise Umrichter in sechs-, acht- oder zehnpulsiger Ausführung verwendet. Die Erfindung eignet sich jedoch auch für Umrichter für andere Phasen- bzw. Pulszahlen.

Ist nachfolgend vereinfacht von einem Generator die Rede, kann es sich hierbei auch um eine generatorisch und motorisch betreibbare elektrische Maschine handeln, beispielsweise um einen sogenannten Startergenerator. Unter einem Umrichter wird nachfolgend eine Brückenschaltung bekannter Art verstanden, die bei einem generatorischen Betrieb der elektrischen Maschine als Gleichrichter arbeitet. Vereinfacht wird nachfolgend auch von einem Gleichrichter gesprochen. Eine Anordnung aus einer zumindest generatorisch betreibbaren elektrischen Maschine und einem entsprechenden, als Gleichrichter arbeitenden Umrichter wird nachfolgend auch als Stromversorgungseinrichtung bezeichnet.

Ein kritischer Betriebsfall bei entsprechenden Stromversorgungseinrichtungen ist der sogenannte Lastabwurf (engl. Load Dump). Dieser tritt auf, wenn sich bei hoch erregter elektrischer Maschine und einem entsprechend hohen abgegebenen Strom die Last an der elektrischen Maschine bzw. dem Umrichter schlagartig verringert. Ein Lastabwurf kann aus einer Abschaltung von Verbrauchern im angeschlossenen Kraftfahrzeugbordnetz oder aus einem Kabelabriss resultieren.

Werden, insbesondere in einem batterielosen Betrieb, in einem Kraftfahrzeugbordnetz Verbraucher schlagartig abgeschaltet, kann die elektrische Maschine aufgrund der Induktivität der Erregerwicklung und des sich daher nur langsam abbauenden Erregerfelds noch bis zu einer Sekunde lang mehr Energie liefern, als das Kraftfahrzeugbordnetz aufnehmen kann. Kann diese Energie nicht oder nicht vollständig durch kapazitive Elemente im Kraftfahrzeugbordnetz oder im Umrichter abgefangen werden, kann es zu Überspannungen und Überspannungsschäden bei Komponenten im Kraftfahrzeugbordnetz kommen.

Bei einem Kabelabriss, durch den das Kraftfahrzeugbordnetz vom Umrichter getrennt wird, liefert die elektrische Maschine ebenfalls weiter Energie, es ist jedoch kein Verbraucher mehr angeschlossen. Im Vergleich zu dem soeben erläuterten Fall der Abschaltung von Verbrauchern sind damit keine Verbraucher mehr gefährdet. Die Verbraucher können auch weiterhin durch die Batterie versorgt werden. Durch Überspannungen kann aber in solchen Fällen die Leistungselektronik der elektrischen Maschine oder des Umrichters geschädigt werden.

In herkömmlichen (passiven) Umrichtern erfolgt jeweils ein gewisser Schutz des Bordnetzes bzw. der Leistungselektronik der elektrischen Maschine und des Umrichters durch den Umrichter selbst, nämlich mittels der dort klassischerweise verbauten Zenerdioden, in denen die Überspannung geklammert und überschüssige Energie in Wärme umgesetzt wird. Auch die Verwendung zusätzlicher Klammerelemente ist in diesem Zusammenhang bekannt.

In Kraftfahrzeugen ist jedoch der Einsatz von aktiven bzw. gesteuerten Umrichtern wünschenswert, unter anderem deshalb, weil aktive Umrichter im Gegensatz zu passiven bzw. ungesteuerten Umrichtern geringere Verlustleistungen im Normalbetrieb aufweisen. Derzeit erhältliche ansteuerbare bzw. aktive Stromventile für aktive Umrichter, beispielsweise Feldeffekttransistoren, besitzen jedoch keine integrierte Klammerfunktion mit einer ausreichenden Robustheit wie herkömmliche Zenerdioden und können daher die Überspannung nicht abfangen. Daher sind in aktiven Umrichtern zwingend zusätzliche Schutzstrategien erforderlich.

Bei einem Lastabwurf können beispielsweise die Generatorphasen kurzgeschlossen werden, indem einige oder alle Stromventile des oberen oder unteren Zweigs eines entsprechenden Umrichters kurzzeitig leitend geschaltet werden. Dies erfolgt insbesondere auf Grundlage einer Auswertung der an den Gleichspannungsanschlüssen des Umrichters anliegenden Bordnetzspannung. Überschreitet diese einen vorgegebenen oberen Schwellwert, wird ein entsprechender Kurzschluss eingeleitet und die Bordnetzspannung sinkt. Unterschreitet die Bordnetzspannung danach einen vorgegebenen unteren Schwellwert, wird der Kurzschluss aufgehoben und die Bordnetzspannung steigt erneut an. Die Bordnetzspannung pendelt daher zwischen dem oberen und dem unteren Schwellwert, bis das Erregerfeld abgeklungen ist.

Die US 2014/343739 A beschreibt ein Verfahren zum Steuern einer mehrphasigen rotierenden elektrischen Maschine, wobei die Maschine als ein Generator arbeitet und mit einem elektrischen Netzwerk verbunden ist, ist von dem Typ, der darin besteht, mindestens eine Phasenwicklung im Falle eines Lastabfalls kurzzuschließen. Ein Kurzschlussbefehl wird für die Phasenwicklung erzeugt, wenn eine erste Messspannung einer Spannung des Netzwerks einen ersten vorbestimmten Schwellenwert überschreitet und wenn ein Phasenstrom in der Phasenwicklung verschwindet und die Richtung ändert. Die erste Messspannung kann durch Filtern der Spannung des Netzwerks mit einer vorbestimmten Zeitkonstante erhalten werden.

Eine elektrische Maschine mit (zumindest weitgehend) abgeklungenem Erregerfeld wird nachfolgend auch als "entregt", eine elektrische Maschine mit nicht oder nur kaum abgeklungenem Erregerfeld als "erregt" bezeichnet. Ist nachfolgend davon die Rede, dass ein "Phasenkurzschluss eingeleitet" wird, sei hierunter verstanden, dass, wie erläutert, die Stromventile des oberen oder des unteren Zweigs eines Umrichters leitend geschaltet werden. Ein entsprechender Phasenkurzschluss wird "aufgehoben", wenn die reguläre aktive Gleichrichtung, beispielsweise unter Verwendung der bekannten Pulsweitenmodulations- oder Blockansteuerung, wieder aufgenommen wird.

Bei den erläuterten Verfahren kann es zu einem kontinuierlichen und nicht mehr auf herkömmliche Weise beendbaren Wechsel zwischen aktiver Gleichrichtung und Phasenkurzschlüssen kommen. Da bei einem Kabelabriss kapazitiv wirkende Elemente im Bordnetz nicht mehr zur Verfügung stehen und die im Umrichter vorhandenen kapazitiven Elemente vergleichsweise klein sind, reichen geringe Energien aus, um die Bordnetzspannung (des verbleibenden, nicht durch den Kabelabriss getrennten Netzes) wieder derart anzuheben, dass der zur Einleitung der Phasenkurzschlüsse verwendete Schwellwert überschritten wird. Das Verfahren kommt daher nicht mehr "zur Ruhe", geht also nicht oder nur sehr verspätet wieder in die dauerhafte aktive Gleichrichtung über. Diese Problematik ist auch unten unter Bezugnahme auf die Figuren erläutert.

Umrichter, in denen neben Mitteln zum Aktivieren einer entsprechenden Lastabwurfsreaktion in Form von Phasenkurzschlüssen eine Spannungsklammerung vorgesehen ist, sind ebenfalls von dieser Problematik betroffen. Entsprechende Klammerschaltungen sind dazu eingerichtet, Spannungsspitzen abzufangen, bevor eine Lastabwurfsreaktion in Form von Phasenkurzschlüssen greifen kann. Eine durch die Klammerschaltungen herbeigeführte Spannungsklammerung wird ab einem Zeitpunkt aktiviert, ab dem die Bordnetzspannung bzw. ein entsprechendes Spannungspotential bis auf einen vorgegebenen Schwellwert ansteigt, und so lange aktiviert gehalten, so lange das Spannungspotential nicht unter den Schwellwert absinkt. Durch die Klammerung steigt die Bordnetzspannung nicht mehr über den als zumindest kurzzeitig sicher definierten Schwellwert an. Typischerweise umfasst eine derartige Spannungsklammerung in Umrichtern, in denen auch Phasenkurzschlüsse eingesetzt werden, die Stromventile in dem nicht für die Phasenkurzschlüsse verwendeten Zweig des Umrichters anzusteuern und damit eine leitende Verbindung zwischen den mit diesen Stromventilen verbundenen Phasenanschlüssen und dem entsprechenden Gleichspannungsanschluss herzustellen.

Die aus dem Stand der Technik bekannten Lösungen erweisen sich, wie erwähnt, insbesondere bei Kabelabrissen nicht immer als günstig, so dass für solche Fälle der Bedarf nach verbesserten Schutzstrategien besteht.

### Offenbarung der Erfindung

Erfindungsgemäß werden ein Verfahren zum Betreiben eines an eine elektrische Maschine angeschlossenen aktiven Umrichters nach dem Anspruch 1 und Mittel zur Implementierung dieses Verfahrens gemäß dem Anspruch 8 vorgeschlagen. Ausführungsformen sind Gegenstand der abhängigen Patentansprüche sowie der nachfolgenden Beschreibung.

### Vorteile der Erfindung

Kern der vorliegenden Erfindung ist es, festzustellen, ob in den eingangs erläuterten Fällen eines Lastabwurfs aufgrund eines Kabelabrisses eine weitere Aktivierung einer Lastabwurfsreaktion in Form von Phasenkurzschlüssen erforderlich ist oder ob diese beendet werden kann. Wie erwähnt, kann es in den erläuterten Verfahren zu einem kontinuierlichen und nicht mehr auf herkömmliche Weise beendbaren Wechsel zwischen aktiver Gleichrichtung und Phasenkurzschlüssen nur durch die Effekte der geringen verbliebenen Kapazitäten kommen, auch wenn die verwendete elektrische Maschine bereits (weitgehend) entregt ist.

Im Rahmen der vorliegenden Erfindung werden Möglichkeiten aufgezeigt, die es ermöglichen, Fälle zu erkennen, in denen die elektrische Maschine bereits entregt oder weitgehend entregt ist und daher keine weitere Aktivierung von Phasenkurzschlüssen mehr erforderlich ist. Die Erfindung ermöglicht es auf diese Weise, schneller oder überhaupt wieder in die reguläre Gleichrichtung überzugehen und die wiederholten Zyklen von regulärer Gleichrichtung und Phasenkurzschlüssen zu beenden. Dies führt zu einem vorteilhaften Betrieb eines entsprechenden Bordnetzes auch nach einem Kabelabriss.

Die vorliegende Erfindung schlägt hierbei ein Verfahren zum Betreiben eines an eine elektrische Maschine angeschlossenen aktiven Umrichters vor. In dem Umrichter ist, wie insoweit bekannt, eine Anzahl von Phasenanschlüssen jeweils über ein ansteuerbares Stromventil in einem ersten Umrichterzweig mit einem ersten Gleichspannungsanschluss und über ein ansteuerbares Stromventil in einem zweiten Umrichterzweig mit einem zweiten Gleichspannungsanschluss verbunden. Ein "ansteuerbares Stromventil" ist im Rahmen der vorliegenden Anmeldung ein (Leistungs-)Transistor, insbesondere ein Metalloxid-Feldeffekttransistor, bekannter Bauart. Ein "erster Umrichterzweig" umfasst die Gesamtheit der mit dem ersten Gleichspannungsanschluss verbundenen Stromventile, ein "zweiter Umrichterzweig" die Gesamtheit der mit dem zweiten Gleichspannungsanschluss verbundenen Stromventile. Ist an den ersten Gleichspannungsanschluss beispielsweise ein positiver Batteriepol angeschlossen und der zweite Gleichspannungsanschluss mit einem negativen Batteriepol oder Masse verbunden, handelt es sich bei dem ersten Umrichterzweig um den "Highside-" oder "oberen" Zweig des Umrichters und bei dem zweiten Umrichterzweig um den "Lowside-" oder "unteren" Zweig des Umrichters.

Jedes der Stromventile eines der beiden Umrichterzweige ist mit einer Klammerschaltung versehen, die dazu eingerichtet ist, eine Spannungsklammerung ab einem ersten Zeitpunkt zu aktivieren, ab dem ein an dem ersten Gleichspannungsanschluss anliegendes Spannungspotential bzw. eine zwischen dem ersten und dem zweiten Gleichspannungsanschluss anliegende Spannung, also eine Bordnetzspannung, bis auf einen vorgegebenen ersten Schwellwert ansteigt, und die Spannungsklammerung aktiviert zu halten, so lange das Spannungspotential nicht unter den ersten Schwellwert absinkt. Die Spannungsklammerung umfasst, das mit der Klammerschaltung versehene Stromventil anzusteuern und damit eine leitende Verbindung zwischen dem mit diesem Stromventil verbundenen Phasenanschluss und dem jeweiligen Gleichspannungsanschluss herzustellen.

Der Umrichter ist ferner dafür eingerichtet, nur beim zusätzlichen Vorliegen von Aktivierungsbedingungen ab einem zweiten Zeitpunkt eine Lastabwurfsreaktion zu aktivieren, wenn zu dem zweiten Zeitpunkt das Spannungspotential oberhalb eines zweiten Schwellwerts liegt. Der zweite Zeitpunkt liegt nach dem ersten Zeitpunkt und der zweite Schwellwert liegt unterhalb des ersten Schwellwerts. Die Lastabwurfsreaktion umfasst, alle Stromventile des anderen der beiden Umrichterzweige anzusteuern und damit eine leitende Verbindung zwischen allen Phasenanschlüssen herzustellen. Der erste Zeitpunkt ist durch den Zeitpunkt des Erreichens des ersten Schwellwerts durch die Bordnetzspannung, also das erwähnte Spannungspotential, festgelegt und entspricht dem Zeitpunkt, zu dem eine Klammerfunktion aktiviert wird. Der zweite Zeitpunkt kann einen vorgegebenen Zeitraum (Totzeit) nach dem ersten Zeitpunkt liegen, beispielsweise 50 Mikrosekunden. Innerhalb dieses Zeitraums zwischen dem ersten und dem zweiten Zeitpunkt muss nicht dauerhaft eine Klammerfunktion aktiviert sein, insbesondere dann nicht, wenn die Bordnetzspannung bereits nach sehr kurzer Zeit wieder unter den ersten Schwellwert absinkt.

Die Spannungsklammerung erfolgt also in dem Zweig des Umrichters, der nicht für die Phasenkurzschlüsse verwendet wird und umgekehrt. Werden also die Phasenkurzschlüsse im unteren Zweig des Umrichters ("Lowside") herbeigeführt, erfolgt die Spannungsklammerung im oberen Zweig des Umrichters ("Highside") und umgekehrt. Typischerweise entspricht dabei der "erste" Gleichspannungsanschluss einem positiven Batteriepol und der "zweite" Gleichspannungsanschluss einem negativen Batteriepol oder Masse.

Erfindungsgemäß ist vorgesehen, dass die Aktivierungsbedingungen zur Aktivierung der Lastabwurfsreaktion umfassen, dass festgestellt wird, dass zu dem zweiten Zeitpunkt die Spannungsklammerung noch aktiviert ist und/oder das Spannungspotential noch nicht unter den ersten Schwellwert abgesunken ist und/oder ein Wert, der einen durch wenigstens einen der Phasenanschlüsse fließenden Strom kennzeichnet, oberhalb eines dritten Schwellwerts liegt. Die drei genannten Kriterien, im Rahmen der vorliegenden Anmeldung als "Aktivierungsbedingungen" bezeichnet, eignen sich, wie erfindungsgemäß erkannt wurde, in besonderer Weise, um festzustellen, ob die elektrische Maschine bereits ausreichend entregt ist. Ist zu dem zweiten Zeitpunkt die Spannungsklammerung noch aktiviert und/oder ist das Spannungspotential noch nicht unter den ersten Schwellwert abgesunken und/oder liegt der Wert, der den durch wenigstens einen der Phasenanschlüsse fließenden Strom kennzeichnet, oberhalb des dritten Schwellwerts, ist die elektrische Maschine noch nicht ausreichend entregt. In anderen Fällen ist der Erregerstrom bereits so weit abgeklungen, dass eine weitere Einleitung von Phasenkurzschlüssen nicht mehr erforderlich ist. In diesen Fällen reicht eine Klammerfunktion aus, um Überspannungen zu begrenzen.

Sämtliche genannten Kriterien lassen sich in einem aktiven Umrichter selbst feststellen. Ein Rückgriff auf beispielsweise in einem Generatorregler der elektrischen Maschine ermittelte Werte ist nicht erforderlich.

In einem entsprechenden Verfahren werden vorteilhafterweise Klammerschaltungen verwendet, in denen der erste Gleichspannungsanschluss über eine Schwellwertschaltung mit einem Ansteueranschluss des mit der Klammerschaltung versehenen Stromventils verbunden ist, wobei die Schwellwertschaltung die Spannungsklammerung aktiviert, indem sie eine leitende Verbindung zwischen dem entsprechenden Phasenanschluss und dem Gleichspannungsanschluss herstellt, wenn das Spannungspotential auf den ersten Schwellwert ansteigt, und die Spannungsklammerung aktiviert hält, indem sie die leitende Verbindung so lange aufrechterhält, so lange das Spannungspotential nicht unter den ersten Schwellwert absinkt. Die Schwellwertschaltung ist insbesondere unter Verwendung einer oder mehrerer Zenerdioden als Schwellwertelemente realisiert, die kathodenseitig mit dem ersten Gleichspannungsanschluss und anodenseitig mit dem Ansteueranschluss, beispielsweise dem Gate eines Metalloxid-Feldeffekttransistors, verbunden sind. Auf diese Weise wird der Ansteueranschluss so lange angesteuert, so lange die Durchbruchsspannung der Zenerdiode(n) überschritten wird.

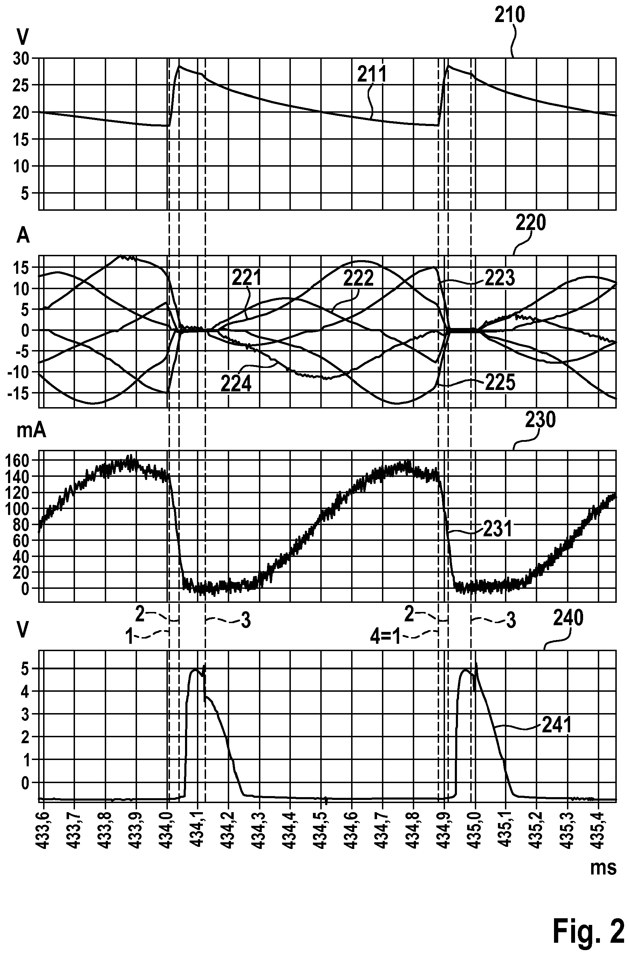

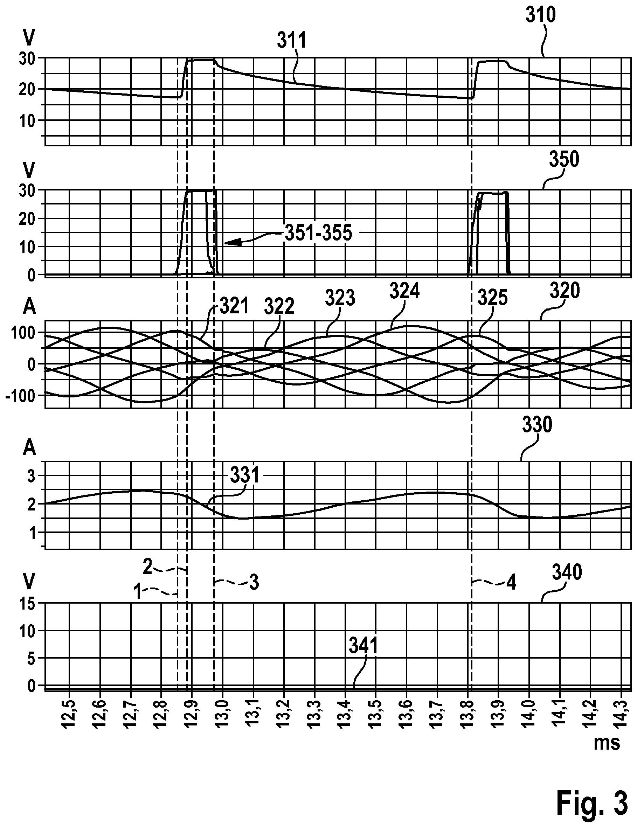

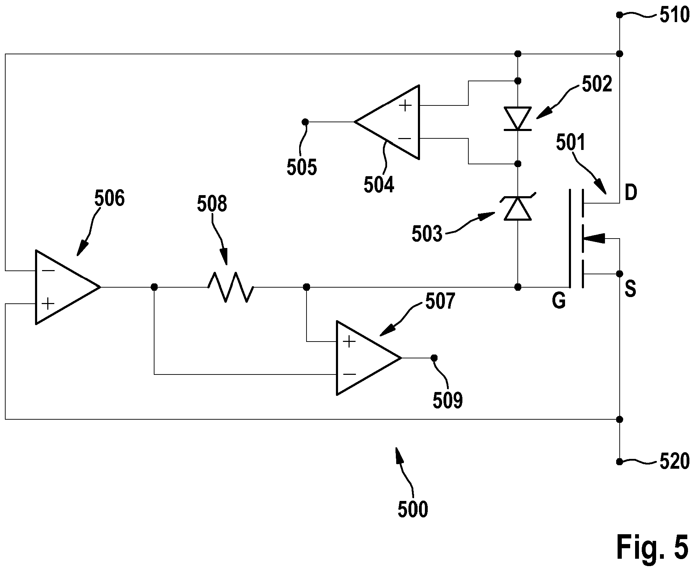

Wie unten anhand Figur 5 erläutert, kann eine Zusatzbeschaltung an einer entsprechenden Schwellwertschaltung erfassen, ob Strom durch die Schwellwertschaltung fließt. Bei einer noch (weitgehend) erregten elektrischen Maschine ist dies so lange der Fall, bis die erwähnte Lastabwurfsreaktion zu dem zweiten Zeitpunkt eingeleitet wird. Zu dem zweiten Zeitpunkt fließt also noch ein entsprechender Strom. Bei einer (weitgehend) entregten elektrischen Maschine sinkt die Bordnetzspannung hingegen sehr bald nach der Aktivierung der Klammerfunktion ab und zu dem zweiten Zeitpunkt, zu dem herkömmlicherweise die erwähnte Lastabwurfsreaktion eingeleitet wird, fließt kein entsprechender Strom mehr. Dies ist auch unter Bezugnahme auf die Figuren 2 und 3 erläutert. Das Verfahren sieht also vorteilhafterweise vor, dass festgestellt wird, dass zu dem zweiten Zeitpunkt die Spannungsklammerung noch aktiviert ist, indem ermittelt wird, ob ein Strom über die Schwellwertschaltung fließt.

Alternativ dazu kann jedoch auch dadurch festgestellt werden, dass das Spannungspotential zu dem zweiten Zeitpunkt noch nicht unter den ersten Schwellwert abgesunken ist, indem das Spannungspotential zumindest zu dem zweiten Zeitpunkt gemessen wird. Dies ermöglicht den Verzicht auf entsprechende Zusatzbeschaltungen, weil Mittel zur Spannungsmessung bereits zur Aktivierung der Lastabwurfsreaktion vorhanden sind und daher im einfachsten Fall lediglich ein oder mehrere weitere Messzeitpunkte definiert werden müssen. Wie erwähnt und unten erläutert, ist es ein Charakteristikum bei einer (weitgehend) entregten elektrischen Maschine, dass das Spannungspotential zu dem zweiten Zeitpunkt auf einen Wert abgesunken ist, der unterhalb des Werts zu dem ersten Zeitpunkt vorliegt. Hingegen bleibt das Spannungspotential bei noch (weitgehend) erregter elektrischer Maschine zwischen dem ersten und dem zweiten Zeitpunkt im Wesentlichen konstant. Es hat sich daher als besonders vorteilhaft erwiesen, das Spannungspotential zwischen dem ersten Zeitpunkt und dem zweiten Zeitpunkt zu messen, so dass dessen Verlauf erfasst werden kann.

Vorteilhafterweise wird gemäß der oben angegebenen dritten Alternative der Wert, der den zu dem zweiten Zeitpunkt durch den wenigstens einen Phasenanschluss fließenden Strom kennzeichnet, auf Grundlage einer Strommessung in dem wenigstens einen Phasenanschluss ermittelt. Es hat sich gezeigt, dass die Phasenströme bei (weitgehend) entregter elektrischer Maschine zu dem zweiten Zeitpunkt auf sehr geringe Werte (nahe 0 Ampere) absinken, bei (weitgehend) erregter elektrischer Maschine hingegen nicht. Daher ermöglicht eine Phasenstrommessung eine zuverlässige Bestimmung, ob die elektrische Maschine bereits ausreichend entregt ist, so dass auf eine weitere Einleitung von Lastabwurfsreaktionen verzichtet werden kann. Vorteilhafte Ausgestaltungen können umfassen, dass der Wert, der den zu dem zweiten Zeitpunkt durch den wenigstens einen Phasenanschluss fließenden Strom kennzeichnet, auf Grundlage eines Maximalwerts des durch den wenigstens einen Phasenanschluss fließenden Stroms oder auf Grundlage einer Summe positiver Stromanteile in wenigstens zwei Phasenanschlüssen ermittelt wird. Eine direkte Erfassung der Phasenströme, z.B. über Messshunts in den Phasenzweigen, kann vorgesehen sein. Sobald der maximal gemessene Phasenstrom oder die Summe der positiven Phasenstromanteile einen zu bestimmenden Wert, den erwähnten dritten Schwellwert, unterschreitet, kann auf das Setzen weiterer Phasenkurzschlüsse verzichtet werden. Die Bestimmung des dritten Schwellwerts wird vorteilhafterweise auf Grundlage der Drehzahl und der thermischen Eigenschaften der elektrischen Maschine ermittelt, wobei ein Wert von im Wesentlichen 0 Ampere immer möglich ist.

Eine erfindungsgemäße Recheneinheit, z.B. ein Steuergerät einer Stromversorgungseinrichtung oder eines aktiven Umrichters ist, insbesondere programmtechnisch, dazu eingerichtet, ein erfindungsgemäßes Verfahren durchzuführen. Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

### Kurze Beschreibung der Zeichnungen

Die Erfindung ist anhand von Ausführungsbeispielen in der Zeichnung schematisch dargestellt und wird im Folgenden unter Bezugnahme auf die Zeichnung beschrieben.
Figur 1 veranschaulicht Lastabwurfsereignisse anhand eines vereinfachten Ersatzschaltbilds eines Kraftfahrzeugbordnetzes.
Figur 2 veranschaulicht Strom- und Spannungsverläufe bei einer Lastabwurfsreaktion bei Kabelabriss und entregter elektrischer Maschine.
Figur 3 veranschaulicht Strom- und Spannungsverläufe bei einer Lastabwurfsreaktion bei Kabelabriss und erregter elektrischer Maschine.
Figur 4 veranschaulicht den prinzipiellen Aufbau eines Spannungsreglers einer elektrischen Maschine in schematischer Darstellung.
Figur 5 veranschaulicht eine Zusatzbeschaltung eines Stromventils eines aktiven Umrichters in schematischer Darstellung.
Figur 6 veranschaulicht einen Spannungsverlauf einer Bordnetzspannung während und nach der Aktivierung einer Klammerfunktion in Detailansicht.
Figur 7 veranschaulicht ein Verfahren gemäß einer Ausführungsform der Erfindung in Form eines schematischen Ablaufplans.
Figur 8 veranschaulicht eine elektrische Maschine mit einem an diese angeschlossenen aktiven Umrichter in schematischer Darstellung.

### Ausführungsform(en) der Erfindung

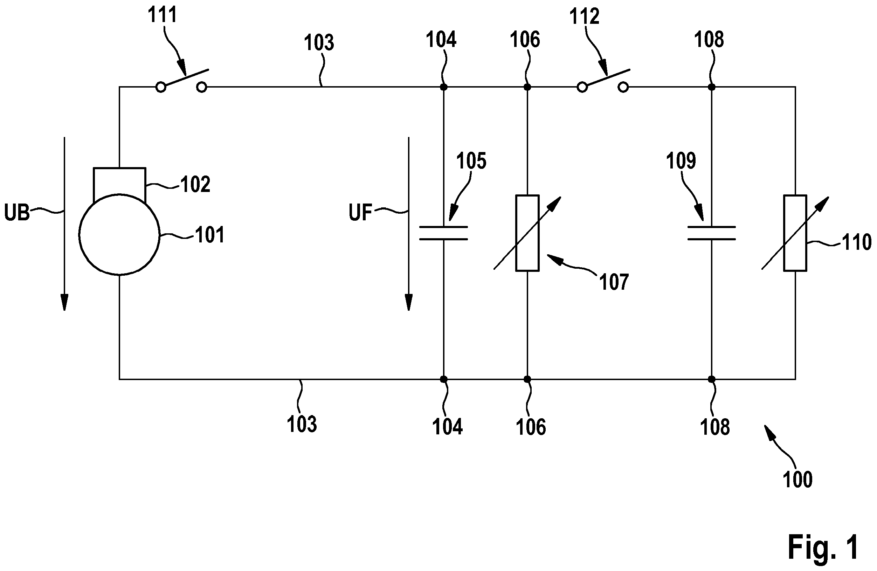

In Figur 1 werden unterschiedliche Lastabwurfsereignisse anhand eines Ersatzschaltbilds 100 eines Kraftfahrzeugbordnetzes veranschaulicht.

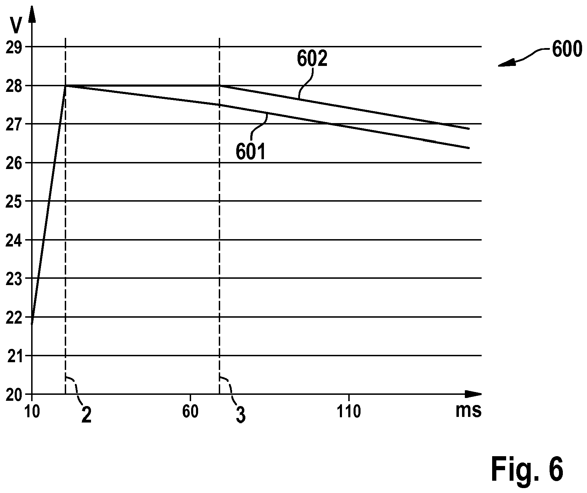

Das Ersatzschaltbild 100 stellt eine als Generator arbeitende elektrische Maschine 101 mit einem zugeordneten aktiven Umrichter 102 dar. Zu Details sei auf die Figur 6 verwiesen. Die elektrische Maschine 101 und der Umrichter 102 sind jeweils über Kabel 103 mit beispielsweise jeweils 1,5 Metern Länge und einem Querschnitt von beispielsweise jeweils 25 Quadratmillimetern an Schaltpunkte 104 angebunden. Zwischen den Schaltpunkten 104 ist ein Kondensator 105 angeschlossen, wie er beispielsweise an einem Fremdstartstützpunkt eines Fahrzeugs vorhanden ist. Die Schaltpunkte 104 sind in einem realen Bordnetz zum Fremdstarten des Kraftfahrzeugs vorgesehen. Zwischen weiteren Schaltpunkten 106 ist symbolisch eine resistive Last 107 veranschaulicht. Ein weiterer Kondensator 109, der eine Bordnetzkapazität veranschaulicht, ist zwischen nochmals weiteren Schaltpunkten 108 eingebunden, zwischen denen auch eine weitere resistive Last 110 symbolisch veranschaulicht ist.

Die Schalter 111 und 112 sind in einem realen Bordnetz nicht vorhanden und veranschaulichen die bei einem Lastabwurf eintretenden Zustände, wie unten erläutert. Der Normalbetrieb eines entsprechenden Bordnetzes, d.h. ohne Lastabwurf, entspricht einem geschlossenen (leitenden) Zustand der Schalter 111 und 112. An der elektrischen Maschine 101 und dem Umrichter 102 liegt eine Spannung UB an, wie durch einen entsprechend beschrifteten Pfeil veranschaulicht. Die Spannung UB wird nachfolgend als Bordnetzspannung bezeichnet. Die Bordnetzspannung liegt an den gleichspannungsseitigen Ausgängen des Umrichters 102 an, wobei einer dieser Ausgänge auch auf Masse liegen kann. In diesem Fall ergibt sich die Bordnetzspannung als Potentialdifferenz zwischen Masse und dem anderen gleichspannungsseitigen Ausgang des Umrichters 102. Die über den Kondensator 107 abfallende Spannung ist ebenfalls mit einem Pfeil veranschaulicht und mit UF bezeichnet.

Der Zustand ohne Lastabwurf entspricht, wie erwähnt, einem geschlossenen Zustand der Schalter 111 und 112. Die elektrische Maschine 101 gibt über den Umrichter 102 gibt einen Strom an das in Figur 1 veranschaulichte Bordnetz ab, der sich aus den Lastwiderständen der resistiven Lasten 107 und 110 ergibt. Ein Lastabwurf kann nun durch das Öffnen eines der Schalter 111 und 112 veranschaulicht werden. Das Öffnen des Schalters 111 entspricht dabei einem Kabelabriss am Umrichter 102. Das Öffnen des Schalters 112 bildet dagegen einen Lastabwurf ab, wie er durch die Abschaltung der resistiven Last 110 im Bordnetz verursacht wird. Die Höhe des abgeworfenen Laststroms richtet sich im letzteren Fall, d.h. einer Lastabschaltung, nach dem Lastwiderstand der abgeworfenen resistiven Last 110, die Höhe des verbleibenden Bordnetzstroms nach dem Lastwiderstand der resistiven Last 107.

In Figur 2 sind Strom- und Spannungsverläufe in vier Diagrammen 210 bis 240 in Volt bzw. Ampere oder Milliampere auf der jeweiligen Ordinate über eine gemeinsame Zeitachse in Millisekunden auf der Abszisse veranschaulicht. Drei charakteristische Zeitpunkte in den Diagrammen 210 bis 240 sind diagrammübergreifend mit 1 bis 4 bezeichnet. Die Diagramme 210 bis 240 betreffen dabei jeweils den Fall eines Kabelabrisses (entsprechend einem Öffnen des Schaltes 111 gemäß der voranstehenden Figur 1) bei (weitgehend) abgeklungenem Erregerstrom in einer generatorisch arbeitenden elektrischen Maschine, beispielsweise der elektrischen Maschine 101 gemäß Figur 1. Diese wird nachfolgend als fünfphasige elektrische Maschine angenommen. Wie erwähnt, eignet sich die Erfindung aber auch für elektrische Maschinen anderer Phasenzahlen.

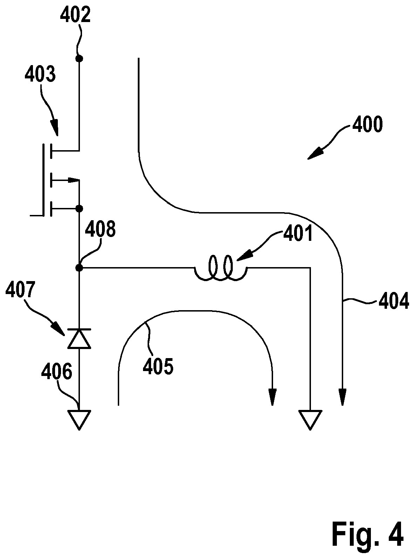

Diagramm 210 veranschaulicht den Verlauf 211 der Bordnetzspannung, beispielsweise der Spannung UB gemäß Figur 1. Diagramm 220 veranschaulicht Verläufe 221 bis 225 der Phasenströme der, wie erwähnt, hier als fünfphasig angenommenen elektrischen Maschine. In Diagramm 230 ist der (sich hier im Milliamperebereich) bewegende Verlauf 231 des Erregerstroms durch die Erregerwicklung der elektrischen Maschine gezeigt, Diagramm 240 zeigt einen Verlauf 241 einer an der Erregerwicklung anliegenden Spannung. Zur weiteren Erläuterung der Diagramme 230 und 240 bzw. der Verläufe 231 und 241 sei ergänzend auch auf die unten erläuterte Figur 4 verwiesen.

Während des gesamten Zeitraums, der in den Diagrammen 210 bis 240 veranschaulicht ist, liegt ein Lastabwurf aufgrund eines Kabelabrisses vor. Zum Zeitpunkt 1 wird, beispielsweise aufgrund eines als ausreichend angesehenen Absinkens der Bordnetzspannung, veranschaulicht durch den Verlauf 211 in Diagramm 210, entschieden, dass ein Phasenkurzschluss beendet werden kann. Vor dem Zeitpunkt 1 liegt also noch ein Phasenkurzschluss vor.

Ab dem Zeitpunkt 1 wird in eine reguläre Gleichrichtung übergegangen. Es wird nun zunächst eine entsprechende Kapazität von beispielsweise 1 bis 100 Mikrofarad, beispielsweise ein Kondensator, der sich im Gleichrichter 102 oder im Regler 400 gemäß Figur 1 zwischen den Anschlüssen B+ und B- befindet, aufgeladen. Aufgrund der vergleichsweise niedrigen Kapazität und der hohen Generatorströme erfolgt die Aufladung sehr schnell. Zum Zeitpunkt 2 , bei dem die Bordnetzspannung, veranschaulicht durch den Verlauf 211 in Diagramm 210, einen Schwellwert (Auslöseschwelle) überschreitet (im Rahmen dieser Anmeldung zuvor und in den Patentansprüchen als "erster" Zeitpunkt bezeichnet), wird daher eine Klammerung dieser Spannung im Umrichter aktiv. Zu Details einer solchen Klammerung wird auf die unten erläuterte Figur 5 verwiesen. Man erkennt, dass zwischen den Zeitpunkten 2 und 3 aufgrund dieser Maßnahme die Phasenströme, veranschaulicht durch die Verläufe 221 bis 225 in Diagramm 220 und der Erregerstrom, veranschaulicht durch den Verlauf 231 in Diagramm 230, bereits auf den Wert Null zurückgehen. Dies stellt, wie im Vergleich zu Figur 3 ersichtlich, ein Charakteristikum bei einer (weitgehend) entregten elektrischen Maschine dar.

Auch die Bordnetzspannung, veranschaulicht durch den Verlauf 211 in Diagramm 210, sinkt ab, was ein weiteres Charakteristikum bei einer (weitgehend) entregten elektrischen Maschine darstellt, wie im Vergleich zu Figur 3 ersichtlich. Weil die Bordnetzspannung jedoch weiter oberhalb eines zur Einleitung von Phasenkurzschlüssen definierten Schwellwerts (im Rahmen dieser Anmeldung zuvor und in den Patentansprüchen als "zweiter" Schwellwert bezeichnet) liegt, wird zum Zeitpunkt 3 (im Rahmen dieser Anmeldung zuvor und in den Patentansprüchen als "zweiter" Zeitpunkt bezeichnet) ein Phasenkurzschluss ausgelöst. In dem Zeitraum zwischen den Zeitpunkten 3 und 4 (nach dem "zweiten" Zeitpunkt) wird während des Phasenkurzschlusses die Bordnetzspannung aufgrund des Stromverbrauchs des Umrichters und dessen Reglers abgebaut. Da die elektrische Maschine während des Phasenkurzschlusses keine Gegenspannung erfährt, reichen die dabei induzierten Spannungen aufgrund der Restremanenz aus, um Phasenströme zu induzieren, wie anhand der Verläufe 221 bis 225 des Diagramms 220 ersichtlich. Diese Phasenströme koppeln dabei sogar über auf den Erregerkreis, wie in Diagramm 230 anhand des Verlaufs 231 des Erregerstroms erkennbar ist.

Zum Zeitpunkt 4 wird der Phasenkurzschluss wieder gelöst. Die in den Phasenströmen zwischengespeicherte Energie reicht aus, um bei der geringen vorhandenen Kapazität die Bordnetzspannung, ersichtlich in dem Verlauf 211 des Diagramms 210, wieder auf einen Wert anzuheben, der oberhalb der Auslöseschwelle liegt, die wiederum zur Aktivierung des Phasenkurzschlusses führt. Der Kreislauf gemäß Figur 2 beginnt von neuem. Es ist erkennbar, dass auch bei (weitgehend) entregter elektrischer Maschine ein entsprechender Kreislauf herkömmlicherweise nicht verlassen werden kann.

In Figur 3 sind Strom- und Spannungsverläufe in fünf Diagrammen 310 bis 350 in Volt bzw. Ampere oder Milliampere auf der jeweiligen Ordinate über eine gemeinsame Zeitachse in Millisekunden (Abszisse) veranschaulicht. Die charakteristischen Zeitpunkte in den Diagrammen 310 bis 350 sind auch hier diagrammübergreifend mit 1 bis 4 bezeichnet. Die Diagramme 310 bis 350 betreffen dabei jeweils den Fall eines Kabelabrisses (entsprechend einem Öffnen des Schalters 111 gemäß der voranstehenden Figur 1) bei (kaum) abgeklungenem Erregerstrom in einer generatorisch arbeitenden elektrischen Maschine, beispielsweise der elektrischen Maschine 101 gemäß Figur 1. Diese wird auch hier als fünfphasige elektrische Maschine angenommen. Wie erwähnt, eignet sich die Erfindung aber auch für elektrische Maschinen anderer Phasenzahlen.

Die in den Diagrammen 310 bis 340 der Figur 3 dargestellten Verläufe 311 bis 341 entsprechen ihrer Herkunft nach jeweils den in den Diagrammen 210 bis 240 dargestellten Verläufen 211 bis 241 und sind entsprechend mit um 100 inkrementierten Bezugszeichen angegeben. Zusätzlich sind in dem Diagramm 350 Verläufe 351 bis 355 von Phasenspannungen der elektrischen Maschine gezeigt.

Während des gesamten Zeitraums, der in den Diagrammen 310 bis 350 veranschaulicht ist, liegt, wie bereits bezüglich Figur 2 erläutert, ein Lastabwurf aufgrund eines Kabelabrisses vor. Auch die Zeitpunkte 1 bis 4 entsprechen einander, so dass die Erläuterungen zu Figur 2 auch hier gelten.

Man erkennt in der Zusammenschau der Figuren 2 und 3, dass bei noch nicht weitreichender Entregung der elektrischen Maschine (gemäß Figur 3) die Bordnetzspannung (siehe Verläufe 211 und 311 im Vergleich zueinander) zu dem Zeitpunkt 3 ("zweiter" Zeitpunkt) noch im Wesentlichen dem Wert zum Zeitpunkt 2 ("erster" Zeitpunkt) entspricht, und dass die Phasenströme (siehe Verläufe 221 und 321 im Vergleich zueinander) noch deutlich höher sind und insbesondere zum Zeitpunkt 3 ("zweiter" Zeitpunkt) nicht deutlich auf einen Wert von im Wesentlichen 0 Ampere absinken. Ferner bleibt auch die an der Erregerwicklung anliegende Spannung (siehe Verläufe 241 und 341 im Vergleich zueinander) bei noch nicht weitreichender Entregung (gemäß Figur 3) der elektrischen Maschine stabil auf einem Wert von weniger als 0 V. Die Beobachtung des Signals 241 bzw. 341 eignet sich damit ebenfalls zur Unterscheidung der Fälle aus den Figuren 2 und 3, d.h. zur Beantwortung der Frage, ob die elektrische Maschine bereits ausreichend entregt ist und damit wieder dauerhaft in einen regulären Gleichrichterbetrieb übergegangen werden könnte.

Neben den in der vorliegenden Erfindung verwendeten Kriterien kann daher auch ein Augenmerk auf dem Spannungsverlauf 241 bzw. 341 in den Diagrammen 240 bzw. 340 der Figuren 2 und 3 gelegt werden. Daher wird die Entstehung entsprechender Spannungen anhand Figur 4 weiter erläutert, die, insgesamt mit 400 bezeichnet, den prinzipiellen Aufbau eines Spannungsreglers einer elektrischen Maschine, wie beispielsweise der elektrischen Maschine 101 aus Figur 1, in schematischer Ansicht zeigt.

Ein entsprechender Spannungsregler 400 umfasst eine Erregerwicklung 401 mit einer Induktivität von beispielsweise 400 Millihenry, durch welche ein Stromfluss (Erregerstrom) typischerweise mittels eines Zweipunktreglers auf Grundlage der Bordnetzspannung geregelt wird. Sobald die an einem Anschluss 402 anliegende Bordnetzspannung zu niedrig wird bzw. unterhalb einer bestimmten Schwelle liegt, wird ein Stromventil 403, beispielsweise ein Metalloxid-Feldeffekttransistor, angesteuert und damit leitend geschaltet. Es ergibt sich, wie mit Pfeil 404 veranschaulicht, ein Stromfluss durch die Erregerwicklung 401. Sobald die Spannung an dem Anschluss zu hoch wird bzw. oberhalb einer bestimmten Schwelle liegt, die Ansteuerung des Stromventils 403 beendet und die Erregerwicklung 401 von dem Anschluss 402 getrennt. Wie mit einem Pfeil 405 veranschaulicht, resultiert daraus ein Freilaufstrom von einem Masseanschluss 406 über eine Diode 407. Der Erregerstrom verringert sich hierdurch.

An einem Schaltpunkt 408, der den Verbindungspunkt zwischen Läufer und Regler bezeichnet, pendelt die anliegende Spannung (deren Verläufe 241 und 341 in den Diagrammen 240 und 340 in den Figuren 2 und 3 gezeigt sind) im regulären Gleichrichterbetrieb zwischen zwei Werten. Im Freilauf entsprechend Pfeil 405 (d.h. bei fehlender Verbindung der Erregerwicklung 410 zum Anschluss 402) liegt die Spannung beim negativen Wert der Diodenspannung der Diode 407. Hingegen liegt die Spannung bei dem am Anschluss 402 anliegenden Wert, also bei der Bordnetzspannung, wenn das Stromventil 403 angesteuert ist und damit eine leitende Verbindung des Schaltpunkts 408 zu dem Anschluss 402 besteht.

Wendet man sich nun erneut dem in Diagramm 240 der Figur 3 veranschaulichten Verlauf 241 zu, ist hieraus erkennbar, dass jeweils vor und nach dem Zeitpunkt 3 ("zweiter" Zeitpunkt) die Spannungswerte an dem Schaltpunkt 408 (denn diese gibt der Verlauf 241 an) von den erläuterten Werten abweichen. Dies ist darauf zurückzuführen, dass bei einem Erregerstrom von 0 Ampere durch die Erregerwicklung 401 der Schaltpunkt 408 nicht niederohmig an ein Spannungspotential, sondern nur über die große Induktivität der Erregerwicklung 401 (wie erwähnt beispielsweise 400 Millihenry) an Masse angebunden ist. Damit lassen sich Spannungen leicht auf die Erregerwicklung induzieren. Die Zeiten, bei denen der Verlauf 241 von den regulären Werten abweicht, korrelieren genau mit den Zeiten, in denen der Erregerstrom bei 0 Ampere liegt.

Im Gegensatz dazu erkennt man aus Figur 3, in der, wie erwähnt, ein Fall dargestellt ist, in dem die Entregung der elektrischen Maschine noch nicht erreicht ist, dass die Spannung, ersichtlich aus dem Verlauf 341 in Diagramm 340, stabil auf weniger als 0 Volt (der erwähnten negativen Diodenspannung) liegt. Die Beobachtung eines entsprechenden Verlaufs, d.h. der an dem Anschluss 402 anliegenden Spannung, eignet sich damit zur Unterscheidung der Fälle aus den Figuren 2 und 3, d.h., wie erwähnt, zur Beantwortung der Frage, ob die elektrische Maschine bereits entregt ist.

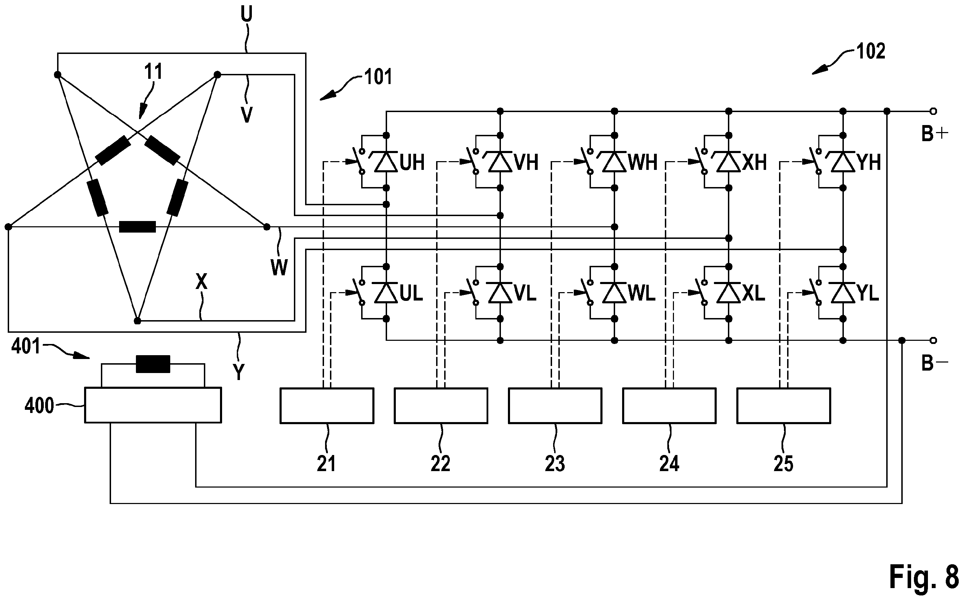

Unter Bezugnahme auf Figur 5 wird nun ein Verfahren gemäß einer Ausführungsform der vorliegenden Erfindung erläutert, das sich ebenfalls zur Unterscheidung dieser beiden Fälle eignet. Dargestellt ist, insgesamt mit 500 bezeichnet, eine bekannte Zusatzbeschaltung eines Stromventils 501, beispielsweise eines Feldeffekttransistors, im Highside-Zweig eines aktiven Umrichters (zu Details sei auf die nachfolgende Figur 8 verwiesen), mit welcher man das Klammerverhalten zwischen den Zeitpunkten 2 und 3 gemäß den Figuren 2 und 3 ("erster" und "zweiter" Zeitpunkt) bewirken kann. Die Zusatzbeschaltung 500 umfasst eine antiparallele Diode 502 und eine Zenerdiode 503, die zwischen Gate G und Drain D des Stromventils 501 angeordnet sind. Die Durchbruchspannung der Zenerdiode 503 ist so gewählt, dass sie bei Überschreiten eines definierten Spannungswerts einer an einem Anschluss 510 anliegenden Bordnetzspannung durchbricht und damit das Gate G des Stromventils 501 angesteuert und das Stromventil 501 leitend geschaltet wird. Durch eine komparatorische Auswertung der an der antiparallelen Diode 502 anliegenden Spannung mittels eines Komparators 504 und Erfassen von dessen Ausgangssignal an einem Anschluss 505 kann damit erkannt werden, ob die antiparallele Diode 502 Strom führt und damit die Klammerung aktiv ist.

Alternativ dazu kann auch eine komparatorische Auswertung der Gate-Source-Spannung unter Verwendung zweier Komparatoren bzw. Verstärker 506 und 507 und eines Entkopplungswiderstands 508 (und eine Auswertung eines Ausgangssignals an Anschluss 509) vorgenommen werden. Es werde im Folgenden von Verstärkern ausgegangen, die nur positive Eingangsspannungen verstärken können und im Fall von negativen Eingangsspannungen 0 Volt als Ausgangsspannung liefern. Derartige Verstärker sind als Verstärker 506 und 507 im dargestellten Beispiel vorgesehen.

Im Fall einer aktiven Gleichrichtung im oberen Umrichterzweig ist das Phasenspannungssignal 520 größer als das Spannungssignal des positiven Gleichspannungsanschlusses 510 und der Verstärker 506 liefert am Ausgang ein positives Signal. Sobald der Vorgang eingeschwungen ist, fließt kein Strom mehr in den Ansteueranschluss G des Stromventils 501 und der Verstärker 507 sieht am Eingang keine Differenzspannung, was zu einem Ausgangssignal von ca. 0 Volt führt. Im Fall einer aktiven Gleichrichtung im unteren Umrichterzweig liegt das an dem Anschluss 520 anliegende Phasenspannungssignal nahe 0 Volt, der Verstärker 506 liefert ein Ausgangssignal bei ca. 0 Volt, ebenso der Verstärker 507. Im Fall einer Klammerung, also einer Spannung zwischen den Anschlüssen 520 und 510, die die Klammerspannung an dem Anschluss 503 und die Threshold-Spannung an dem Stromventil 501 übersteigt, liefert der Verstärker 506 eine Ausgangsspannung von 0 Volt, während über den Klammerpfad am Ansteueranschluss G des Stromventils 501 eine Spannung nahe der Threshold-Spannung eingestellt wird. Diese Spannungsdifferenz wird am Eingang des Verstärkers 507 erkennbar und am Ausgang 509 erkennbar. Damit kann am Ausgang 509 eindeutig erkannt werden, ob die Schaltung sich in Klammerung befindet.

Eine weitere gemäß einer Ausführungsform der Erfindung mögliche Überprüfung wird anhand Figur 6 veranschaulicht, in der Verläufe 601 und 602 einer Bordnetzspannung bei (weitgehend) entregter elektrischer Maschine (Verlauf 601) und bei noch nicht oder nur kaum entregter elektrischer Maschine (Verlauf 602) veranschaulicht sind. Die Verläufe 601 und 602 sind in Volt auf der Ordinate gegenüber einer Zeit in Mikrosekunden auf der Abszisse in einem Diagramm 600 aufgetragen. Die Verläufe 601 und 602 können als Detailansichten der Verläufe 211 und 311 gemäß den Figuren 2 und 3 angesehen werden, auch die Zeitpunkte 2 und 3 sind entsprechend bezeichnet.

Man erkennt, dass zu dem Zeitpunkt 3 im Fall der (weitgehend) entregten elektrischen Maschine (Verlauf 601) die Bordnetzspannung deutlich unter den Wert zu dem Zeitpunkt 2 abgesunken ist. Im Fall der noch nicht oder nur kaum entregten elektrischen Maschine (Verlauf 602) ist hingegen der Wert zu dem Zeitpunkt 3 noch im Wesentlichen derselbe wie zu dem Zeitpunkt 2. Somit lässt sich auch auf Grundlage einer Auswertung der Bordnetzspannung, wie erwähnt, eine Unterscheidung zwischen den beiden Fällen vornehmen.

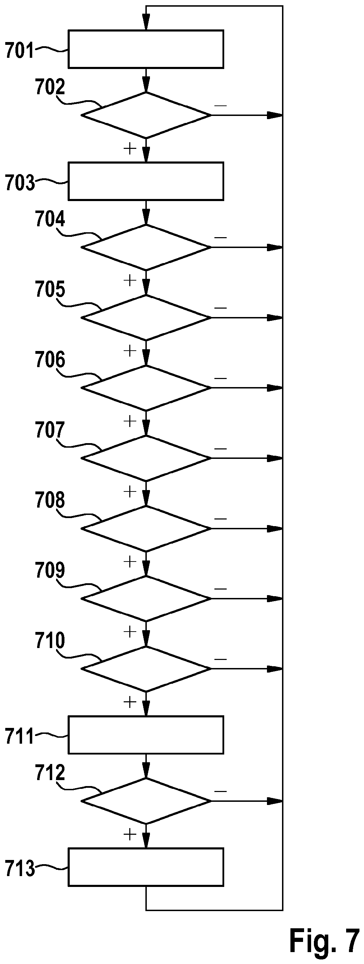

In Figur 7 ist ein Verfahren gemäß einer Ausführungsform der vorliegenden Erfindung in Form eines schematischen Ablaufplans veranschaulicht. Das Verfahren beginnt in einem mit 701 veranschaulichten Zustand, in dem ein aktiver Umrichter eine reguläre Gleichrichtung vornimmt. Wird in einem Überprüfungsschritt 702 erkannt, dass eine Bordnetzspannung einen vorgegebenen Wert zur Aktivierung einer Klammerfunktion liegt erreicht hat (+), beispielsweise 24 Volt (im Rahmen der vorliegenden Anmeldung als "erster" Schwellwert bezeichnet), wird zunächst in einem Schritt 703 eine Totzeit von beispielsweise 50 Mikrosekunden abgewartet. Der Beginn dieser Totzeit entspricht dem im Rahmen der vorliegenden Anmeldung so bezeichneten "ersten" Zeitpunkt, das Ende dieser Totzeit entsprechend dem "zweiten" Zeitpunkt. Zwischen dem "ersten" und dem "zweiten" Zeitpunkt (Zeitpunkte 2 und 3 der zuvor erläuterten Figuren) kann beispielsweise eine Klammerfunktion aktiviert werden. Nach dem Ende der Totzeit, also zum zweiten Zeitpunkt, werden nun, (teilweise) alternativ und/oder (teilweise) kumulativ, Überprüfungsschritte 704 bis 710 durchgeführt. Wird in dem Überprüfungsschritt hingegen 702 erkannt, dass eine Bordnetzspannung nicht oberhalb eines vorgegebenen Werts zur Einleitung eines Phasenkurzschlusses, also zur Aktivierung einer Lastabwurfsreaktion liegt (-), beispielsweise oberhalb von 24 Volt, wird das Verfahren mit Zustand 701 fortgesetzt.

Im Gegensatz zur Darstellung der Figur 7 können mehr oder weniger der Überprüfungsschritte 704 bis 710 vorgesehen sein. Im Rahmen einer Ausführungsform der Erfindung umfassen Überprüfungsschritte 704 bis 710 die Feststellung, ob zu dem zweiten Zeitpunkt, also zum Ende der Totzeit gemäß Schritt 703, die mehrfach erläuterte Spannungsklammerung noch aktiviert ist und/oder das Spannungspotential noch nicht unter den ersten Schwellwert abgesunken ist und/oder ein Wert, der einen durch wenigstens einen der Phasenanschlüsse fließenden Strom kennzeichnet, oberhalb eines dritten Schwellwerts liegt. Ferner können die Überprüfungsschritte 704 bis 710 die Feststellung umfassen, ob ein versorgungsseitig einer Erregerwicklung der elektrischen Maschine (Erregerwicklung 401 gemäß Figur 4, Anschluss 408) anliegendes Spannungspotential zwischen dem Spannungspotential der Bordnetzspannung und einem Massepotential liegt, wenn die Erregerwicklung von dem Spannungspotential der Bordnetzspannung getrennt ist und/oder ein durch die Erregerwicklung fließender Strom unterhalb eines entsprechenden Stromschwellwerts liegt und/oder nach einem erstmaligen Aktivieren einer Lastabwurfsreaktion, nach der weitere Lastabwurfsreaktionen aktiviert wurden, mehr als ein vorgegebener Zeitraum verstrichen ist und/oder mehr als eine vorgegebene Anzahl an Lastabwurfsreaktionen aktiviert wurden. Sind eine oder mehrere dieser Bedingungen erfüllt, wird in einem Schritt 711 eine Lastabwurfsreaktion in Form eines Phasenkurzschlusses eingeleitet.

So lange in einem Überprüfungsschritt 712 festgestellt wird, dass die Bordnetzspannung noch nicht auf einen vorgegebenen Wert zur Deaktivierung der Lastabwurfsreaktion, der hier als "zweiter" Schwellwert bezeichnet wird, abgesunken ist (+),wird in einem Schritt 713 eine weitere Totzeit von beispielsweise 50 Mikrosekunden abgewartet, ehe das Verfahren in den Zustand 701 zurücckehrt. Anderenfalls (-) kehrt das Verfahren direkt in den Zustand 701 zurück. Ebenso kehrt das Verfahren direkt in den Zustand 701 zurück, jedoch ohne dass zuvor eine Lastabwurfsreaktion gemäß Schritt 711 eingeleitet wird, wenn in einem oder in mehreren der Überprüfungsschritte 704 bis 710 eine negative Feststellung (-) getroffen wird.

In Figur 8 ist zur weiteren Erläuterung eine elektrische Maschine, wie in Figur 1 mit 101 bezeichnet, mit einem an diese angeschlossenen aktiven Umrichter 102 schematisch veranschaulicht.

Die elektrische Maschine 101 umfasst einen fünfphasig und in Drudenfußschaltung ausgebildeten Stator 11 und einen Rotor mit einer Erregerwicklung 401. Die einzelnen Wicklungen des Stators 11 und des Rotors 12 sind nicht gesondert bezeichnet. Ein Generatorregler, wie in Figur 4 mit 400 bezeichnet, wertet eine Bordnetzspannung zwischen einem ersten Gleichspannungsanschluss B+ und einem zweiten Gleichspannungsanschluss B- (der zweite Gleichspannungsanschluss B- kann auf Masse liegen) aus und regelt, wie zu Figur 4 erläutert, die Ausgangsleistung der elektrischen Maschine 101. Der erste Gleichspannungsanschluss B+ entspricht daher dem Anschluss 402 gemäß Figur 4, der zweite Gleichspannungsanschluss dem Anschluss 406.

Die elektrische Maschine 101 ist über fünf Phasenanschlüsse U bis Y jeweils über ein- und ausschaltbare, steuerbare Stromventile, hier mit UL bis YL und UH bis YH bezeichnet, an den ersten Gleichspannungsanschluss B+ und den zweiten Gleichspannungsanschluss B- angebunden. Die Stromventile UH bis YH bilden einen oberen Gleichrichterzweig ("Highside"), die Stromventile UL bis YL einen unteren Gleichrichterzweig ("Lowside"). Jedes der Stromventile UH bis YH kann daher eine Zusatzbeschaltung 500 aufweisen, wie sie in Figur 5 veranschaulicht ist, und daher das in Figur 5 veranschaulichte Stromventil 501 bilden. In diesem Fall bildet jeder der Phasenanschlüsse U bis Y einen Anschluss 520 gemäß Figur 5 und der erste Gleichspannungsanschluss B+ den in Figur 5 veranschaulichten Anschluss 510.

Die ein- und ausschaltbaren, steuerbaren Stromventile UH bis YH sind in der Figur 6 vereinfacht als Schalter mit parallel geschalteten Zenerdioden veranschaulicht. Die Zenerdioden symbolisieren dabei sowohl die typische Durchbruchseigenschaft ab einer bestimmten Drain-Source-Spannung aufgrund einer Schaltung wie beispielsweise in Figur 5 gezeigt oder aber der Avalanche-Spannung, als auch die typischerweise vorhandene Inversdiode. Im unteren Zweig UL bis YL ist jeweils eine einfache Diode dargestellt, da hier im dargestellten Beispiel der Klammerbetrieb nicht vorgehalten ist. Wie erwähnt, kann stattdessen eine Klammerfunktion auch in dem anderen Zweig des Umrichters vorgesehen sein, die Einleitung von Phasenkurzschlüssen erfolgt jeweils mittels der nicht mit der Klammerfunktion versehenen Stromventile.

Die Stromventile UH bis YH und UL bis YL sind durch jeweilige dezentrale Steuereinrichtungen 21 bis 25, wie hier mit gestrichelten Ansteuerpfeilen veranschaulicht, ansteuerbar. Die in Figur 5 veranschaulichte Zusatzbeschaltung 500 kann in die Steuereinrichtungen 21 bis 25 integriert sein. Auch eine zentrale Ansteuerung aller Stromventile UH bis YH und UL bis YL kann vorgesehen sein.

## Patentansprüche

1. Verfahren zum Betreiben eines an eine elektrische Maschine (101) angeschlossenen aktiven Umrichters (102), in dem eine Anzahl von Phasenanschlüssen (U-Y) jeweils über ein ansteuerbares Stromventil (UH-YH) in einem ersten Umrichterzweig mit einem ersten Gleichspannungsanschluss (B+) und über ein ansteuerbares Stromventil (UL-YL) in einem zweiten Umrichterzweig mit einem zweiten Gleichspannungsanschluss (B-) verbunden sind, wobei jedes der Stromventile (UH-YH) eines der beiden Umrichterzweige mit einer Klammerschaltung (500) versehen ist, die dazu eingerichtet ist, eine Spannungsklammerung ab einem ersten Zeitpunkt (2) zu aktivieren, ab dem ein an dem ersten Gleichspannungsanschluss (B+) anliegendes Spannungspotential bis auf einen vorgegebenen ersten Schwellwert ansteigt, und die Spannungsklammerung so lange aktiviert zu halten, so lange das Spannungspotential nicht unter den ersten Schwellwert absinkt, wobei die Spannungsklammerung umfasst, das mit der Klammerschaltung (500) versehene Stromventil (UH-YH) anzusteuern und damit eine leitende Verbindung zwischen dem mit diesem Stromventil (UH-YH) verbundenen Phasenanschluss (U-Y) und dem jeweiligen Gleichspannungsanschluss (B+) herzustellen, **dadurch gekennzeichnet, dass** der Umrichter (102) ferner dafür eingerichtet ist, nur beim Vorliegen von Aktivierungsbedingungen ab einem zweiten Zeitpunkt (3) eine Lastabwurfsreaktion zu aktivieren, wenn zu dem zweiten Zeitpunkt (3) das Spannungspotential oberhalb eines zweiten Schwellwerts liegt, wobei der zweite Zeitpunkt (3) nach dem ersten Zeitpunkt (2) und der zweite Schwellwert unterhalb des ersten Schwellwerts liegt und die Lastabwurfsreaktion umfasst, alle Stromventile (UL-YL) des anderen der beiden Umrichterzweige anzusteuern und damit eine leitende Verbindung zwischen allen Phasenanschlüssen (U-Y) herzustellen, wobei die Aktivierungsbedingungen umfassen, dass festgestellt wird, dass zu dem zweiten Zeitpunkt (3) die Spannungsklammerung noch aktiviert ist und/oder das Spannungspotential noch nicht unter den ersten Schwellwert abgesunken ist und/oder ein Wert, der einen durch wenigstens einen der Phasenanschlüsse (U-Y) fließenden Strom kennzeichnet, oberhalb eines dritten Schwellwerts liegt.

2. Verfahren nach Anspruch 1, bei dem Klammerschaltungen (500) verwendet werden, in denen der erste Gleichspannungsanschluss (B+) über eine Schwellwertschaltung mit einem Ansteueranschluss (G) des mit der Klammerschaltung (500) versehenen Stromventils (UH-YH) verbunden ist, wobei die Schwellwertschaltung die Spannungsklammerung aktiviert, indem sie den Ansteueranschluss (G) ansteuert, wenn das Spannungspotential auf den ersten Schwellwert ansteigt, und die Spannungsklammerung aktiviert hält, indem sie den Ansteueranschluss (G) so lange weiter ansteuert, so lange das Spannungspotential nicht unter den ersten Schwellwert absinkt.

3. Verfahren nach Anspruch 2, bei dem festgestellt wird, dass zu dem zweiten Zeitpunkt (3) die Spannungsklammerung noch aktiviert ist, indem ermittelt wird, ob ein Strom über die Schwellwertschaltung fließt.

4. Verfahren nach einem der vorstehenden Ansprüche, bei dem festgestellt wird, dass das Spannungspotential zu dem zweiten Zeitpunkt (3) noch nicht unter den ersten Schwellwert abgesunken ist, indem das Spannungspotential zumindest zu dem zweiten Zeitpunkt gemessen wird.

5. Verfahren nach Anspruch 4, bei dem das Spannungspotential zwischen dem ersten Zeitpunkt (2) und dem zweiten Zeitpunkt (3) mehrfach gemessen wird.

6. Verfahren nach einem der vorstehenden Ansprüche, bei dem der Wert, der den zu dem zweiten Zeitpunkt (3) durch den wenigstens einen Phasenanschluss (U-Y) fließenden Strom kennzeichnet, auf Grundlage einer Strommessung in dem wenigstens einen Phasenanschluss (U-Y) ermittelt wird.

7. Verfahren nach einem der vorstehenden Ansprüche, bei dem der Wert, der den zu dem zweiten Zeitpunkt (3) durch den wenigstens einen Phasenanschluss (U-Y) fließenden Strom kennzeichnet, auf Grundlage eines Maximalwerts des durch den wenigstens einen Phasenanschluss (U-Y) fließenden Stroms oder auf Grundlage einer Summe positiver Stromanteile in wenigstens zwei Phasenanschlüssen (U-Y) ermittelt wird.

8. Vorrichtung zur Steuerung eines an eine elektrische Maschine angeschlossenen aktiven Umrichters (102), in dem eine Anzahl von Phasenanschlüssen (U-Y) jeweils über ein ansteuerbares Stromventil (UH-YL) in einem ersten Umrichterzweig mit einem ersten Gleichspannungsanschluss (B+) und über ein ansteuerbares Stromventil (UL-YL) in einem zweiten Umrichterzweig mit einem zweiten Gleichspannungsanschluss (B-) verbunden sind, wobei jedes der Stromventile (UH-YL) eines der beiden Umrichterzweige mit einer Klammerschaltung (500) versehen ist, aufweisend eine Recheneinheit, umfassend Mittel zur Ausführung eines Verfahrens nach einem der vorstehenden Ansprüche.

9. Computerprogramm, das eine Vorrichtung nach Anspruch 8 dazu veranlasst, ein Verfahren nach einem der Ansprüche 1 bis 7 durchzuführen, wenn es auf der Recheneinheit ausgeführt wird.

10. Maschinenlesbares Speichermedium mit einem darauf gespeicherten Computerprogramm nach Anspruch 9.

## Claims

1. A method of operating an active inverter (102) connected to an electric machine (101), in which a number of phase terminals (U-Y) are each connected to a first DC voltage terminal (B+) via a controllable current valve (UH-YH) in a first inverter branch and to a second DC voltage terminal (B-) via a controllable current valve (UL-YL) in a second inverter branch, wherein each of the current valves (UH-YH) of one of the two inverter branches is provided with a clamping circuit (500) arranged to activate a voltage clamping from a first moment (2) from which a voltage potential applied to the first DC terminal (B+) rises to a predetermined first threshold value, and keeping the voltage clamping activated as long as the voltage potential does not fall below the first threshold value, wherein the voltage clamping comprises driving the current valve (UH-YH) provided with the clamping circuit (500) and thereby establishing a conductive connection between the phase terminal (U-Y) connected to this current valve (UH-YH) and the respective DC voltage terminal (B+), **characterized in that** the inverter (102) is further adapted to activate a load dump response only upon the presence of activation conditions from a second moment (3) if at the second moment (3) the voltage potential is above a second threshold, the second moment (3) being after the first moment (2) and the second threshold being below the first threshold, and the load dump response comprises activating all current valves (UL-YL) of the other of the two inverter branches, thereby establishing a conductive connection between all phase terminals (U-Y), the activation conditions comprising determining that at the second moment (3) the voltage clamp is still activated and/or the voltage potential has not yet dropped below the first threshold and/or a value characterizing a current flowing through at least one of the phase terminals (U-Y) is above a third threshold.

2. The method according to claim 1, wherein clamp circuits (500) are used in which the first DC voltage terminal (B+) is connected to a control terminal (G) of the current valve (UH-YH) provided with the clamp circuit (500) via a threshold circuit, the threshold circuit activating the voltage clamping by driving the control terminal (G) when the voltage potential rises to the first threshold value, and keeping the voltage clamping activated by continuing to drive the control terminal (G) as long as the voltage potential does not fall below the first threshold value.

3. The method of claim 2, wherein it is determined that at the second moment (3) the voltage clamp is still activated by determining whether a current is flowing across the threshold circuit.

4. The method according to any one of the preceding claims, wherein it is determined that the voltage potential at the second moment (3) has not yet dropped below the first threshold value by measuring the voltage potential at least at the second moment.

5. The method of claim 4, wherein the voltage potential is measured a plurality of times between the first moment (2) and the second moment (3).

6. The method according to any one of the preceding claims, wherein the value characterizing the current flowing through the at least one phase terminal (U-Y) at the second moment (3) is determined on the basis of a current measurement in the at least one phase terminal (U-Y).

7. The method according to any one of the preceding claims, wherein the value characterizing the current flowing through the at least one phase terminal (U-Y) at the second moment (3) is determined based on a maximum value of the current flowing through the at least one phase terminal (U-Y) or based on a sum of positive current components in at least two phase terminals (U-Y).

8. A device for controlling an active inverter (102) connected to an electrical machine, in which a number of phase terminals (U-Y) are each connected to a first DC voltage terminal (B+) via a controllable current valve (UH-YL) in a first inverter branch and to a second DC voltage terminal (B-) via a controllable current valve (UL-YL) in a second inverter branch, wherein each of the current valves (UH-YL) of one of the two inverter branches is provided with a clamp circuit (500), having a computing unit comprising means for carrying out a method according to one of the preceding claims.

9. A computer program that causes a device according to claim 8 to perform a method according to any one of claims 1 to 7 when executed on the computing unit.

10. A machine-readable storage medium having a computer program stored thereon according to claim 9.

## Revendications

1. Procédé pour faire fonctionner un convertisseur actif (102) relié à une machine électrique (101), dans lequel une pluralité de bornes de phase (U-Y) sont respectivement reliées à une première borne de tension continue (B+) par l'intermédiaire d'une valve de courant pouvant être commandée (UH-YH) dans une première branche de convertisseur et à une seconde borne de tension continue (B-) par l'intermédiaire d'une valve de courant pouvant être commandée (UL-YL) dans une seconde branche de convertisseur, dans lequel chacune des valves de courant (UH-YH) de l'une des deux branches de convertisseur est pourvue d'un circuit de calage (500) qui est configuré pour activer un calage de tension à un premier instant (2) où un potentiel de tension présent sur la première borne de tension continue (B+) augmente jusqu'à une première valeur de seuil prédéfinie, et pour maintenir le calage de tension activé tant que le potentiel de tension ne descend pas en dessous de la première valeur de seuil, dans lequel le calage de tension inclut la commande de la valve de courant (UH-YH) munie du circuit de calage (500) et ainsi l'établissement d'une liaison conductrice entre la borne de phase (U-Y) reliée à cette valve de courant (UH-YH) et la borne de tension continue (B+) respective, **caractérisé en ce que** le convertisseur (102) est en outre configuré pour activer, uniquement lorsque des conditions d'activation sont présentes, une réaction de délestage à un second instant (3) lorsque le potentiel de tension au second instant (3) est supérieur à une deuxième valeur de seuil, dans lequel le second instant (3) est postérieur au premier instant (2) et la deuxième valeur de seuil est inférieure à la première valeur de seuil, et la réaction de délestage inclut la commande de toutes les valves de courant (UL-YL) de l'autre des deux branches de convertisseur et ainsi l'établissement d'une liaison conductrice entre toutes les bornes de phase (U-Y), dans lequel les conditions d'activation incluent de déterminer que le calage de tension est encore activé au second instant (3) et/ou que le potentiel de tension n'est pas encore descendu en dessous de la première valeur de seuil et/ou qu'une valeur qui indique un courant circulant à travers au moins une des bornes de phase (U-Y) est supérieur à une troisième valeur de seuil.

2. Procédé selon la revendication 1, dans lequel sont utilisés des circuits de calage (500) dans lesquels la première borne de tension continue (B+) est reliée à une borne de commande (G) de la valve de courant (UH-YH) munie du circuit de calage (500) par l'intermédiaire d'un circuit à valeur de seuil, dans lequel le circuit à valeur de seuil active le calage de tension en commandant la borne de commande (G) lorsque le potentiel de tension augmente jusqu'à une première valeur de seuil, et maintient le calage de tension activé en continuant à commander la borne de commande (G) tant que le potentiel de tension n'est pas descendu pas en dessous de la première valeur de seuil.

3. Procédé selon la revendication 2, dans lequel il est déterminé que le calage de tension est encore activé au second instant (3), en déterminant si un courant circule à travers le circuit à valeur de seuil.

4. Procédé selon l'une des revendications précédentes, dans lequel il est déterminé que le potentiel de tension au second instant (3) n'est pas encore descendu en dessous de la première valeur de seuil, en mesurant le potentiel de tension au moins au second instant.

5. Procédé selon la revendication 4, dans lequel le potentiel de tension entre le premier instant (2) et le second instant (3) est mesuré plusieurs fois.

6. Procédé selon l'une des revendications précédentes, dans lequel la valeur qui indique le courant circulant à travers la au moins une borne de phase (U-Y) au second instant (3) est déterminée sur la base d'une mesure de courant dans la au moins une borne de phase (U-Y).

7. Procédé selon l'une des revendications précédentes, dans lequel la valeur qui indique le courant circulant à travers la au moins une borne de phase (U-Y) au second instant (3) est déterminée sur la base d'une valeur maximale du courant circulant à travers la au moins une borne de phase (U-Y) ou sur la base d'une somme de composants de courant positives dans au moins deux bornes de phase (U-Y).

8. Dispositif pour commander un convertisseur actif (102) relié à une machine électrique, dans lequel une pluralité de bornes de phase (U-Y) sont respectivement reliées à une première borne de tension continue (B+) par l'intermédiaire d'une valve de courant pouvant être commandée (UH-YL) dans une première branche de convertisseur et à une seconde borne de tension continue (B-) par l'intermédiaire d'une valve de courant pouvant être commandée (UL-YL) dans une seconde branche de convertisseur, dans lequel chacune des valves de courant (UH-YL) de l'une des deux branches de convertisseur est pourvue d'un circuit de calage (500) comportant une unité de calcul, comprenant des moyens pour mettre en œuvre un procédé selon l'une des revendications précédentes.

9. Programme informatique qui permet à un dispositif selon la revendication 8 de mettre en œuvre un procédé selon l'une des revendications 1 à 7, lorsqu'il est exécuté sur l'unité de calcul.

10. Support de mémoire lisible par machine sur lequel est stocké un programme informatique selon la revendication 9.
